Europäisches Patentamt

(19) European Patent Office

Office européen des brevets

(11) Veröffentlichungsnummer: **0 224 170**
**B1**

# (12) EUROPÄISCHE PATENTSCHRIFT

(45) Veröffentlichungstag der Patentschrift:
**03.10.90**

(51) Int. Cl.⁵: **A01F 29/02, A01F 29/20**

(21) Anmeldenummer: **86115934.1**

(22) Anmeldetag: **17.11.86**

(54) **Messerradhäcksler.**

(30) Priorität: **23.11.85 DE 3541523**

(43) Veröffentlichungstag der Anmeldung:
**03.06.87 Patentblatt 87/23**

(45) Bekanntmachung des Hinweises auf die Patenterteilung:
**03.10.90 Patentblatt 90/40**

(84) Benannte Vertragsstaaten:
**AT CH DE FR GB LI NL**

(56) Entgegenhaltungen:
**BE-A- 567 901**
**DE-C- 691 505**
**DE-U- 1 788 684**
**US-A- 2 767 753**

(73) Patentinhaber: **Alois Pöttinger Maschinenfabrik GmbH,
A-4710 Grieskirchen(AT)**

(72) Erfinder: **Rauscher, Sigurd, Sonnfeldsiedlung 24,
A-4710 Grieskirchen(AT)**
Erfinder: **Schremmer, Wolfgang, A-4062 Thening 50(AT)**
Erfinder: **Frauscher, Josef, A-4942 Gurten 50(AT)**

(74) Vertreter: **Dupal, Helmut, Dipl-Ing., Jägerweg 12,
A-4702 Wallern(AT)**

## Beschreibung

Die Erfindung bezieht sich auf einen Messerradhäcksler nach dem Gattungsbegriff des Anspruches 1.

Bei Messerradhäckslern dieser Art sind die Messer an der, der axialen Einlaßöffnung des Häckslergehäuses zugewandten Vorderseite des Messerrades im wesentlichen in radialer Richtung verlaufend befestigt und arbeiten mit einer am Häckslergehäuse angebrachten Gegenschneide zusammen. Am Umfang des Messerrades sind Wurfflügel angebracht, welche das gehäckselte Erntegut entlang der Außenwand des Häcksler gehäuses mitnehmen und durch die tangentiale Auslaßöffnung an der Außenwand des Häckslergehäuses in einen Auswurfkrümmer befördern und durch diesen auswerfen.

Bei einer allgemein üblichen Bauart solcher Messerradhäcksler, wie beispielsweise aus dem Prospekt Nr.II/III 16 1180 16/11 Pöttinger bekannt, ist jedes Messer auf einem Messerbock aufgeschraubt, der seinerseits auf einem als Scheibenrad ausgebildeten Messerrad befestigt ist. Am Umfang des Scheibenrades sind zwischen den Messern Wurfflügel befestigt, die gewöhnlich dort verschraubt sind, um die Zahl der Wurfflügel je nach erforderlicher Auswurfleistung verändern zu können.

Das gehäckselte Erntegut gleitet dabei die keilförmige Rinne, die von Messer, Messerbock und Messerradscheibe gebildet ist, entlang nach außen, worauf es von den Wurfflügeln erfaßt und ausgeworfen wird. Durch den engen Strömungsquerschnitt und durch die Form der Rinne tritt starke Turbulenz im Erntegut auf, verbunden mit starker innerer Reibung, zusätzlich zu der erheblichen äußeren Reibung an den Begrenzungswänden der Rinne, wodurch bedeutende Energiemengen aufgebraucht werden.

Aus der DEOS 29 09 000 ist ein Messerradhäcksler nach dem Gattungsbegriff bekannt, bei dem die Messer in Abstand vor der Messerradscheibe an Bolzen befestigt sind, die ihrerseits mit der Messerradscheibe verschraubt sind. Der zwischen Messern und Messerradscheibe gebildete Durchtrittsspalt gestattet dem gehäckselten Erntegut ohne wesentlichen Widerstand hindurchzutreten, worauf es in den Bereich zwischen Messerradscheibe und radialer Gehäusewand gelangt und dort von an der Messerradscheibe befestigten Wurfflügeln erfaßt und ausgeworfen wird. Das gehäckselte Erntegut findet bei diesem Messerradhäcksler im Vergleich zur vorgenannten Anordnung weniger Behinderung beim Abströmen vor, so daß sich die auftretende Reibung verringert, doch verbleibt wegen der vielen konstruktiv begründeten Hindernisse ein erheblicher Strömungswiderstand, der zu Turbulenz und erhöhter Reibung Anlaß gibt und damit den Energiebedarf erhöht.

Eine gleichfalls lang bekannte Anordnung bei Messerradhäckslern nach dem Gattungsbegriff ist beispielsweise in "Die Landmaschinen und ihre Instandhaltung" Paul Schweigmann, Fachbuchverlag Dr.Pfanneberg, Giessen 1955, beschrieben. Bei diesen Maschinen besteht das Messerrad aus zwei oder mehreren radialen Radspeichen, an denen Messer und Wurfflügel befestigt sind. Das gehäckselte Erntegut gelangt bei dieser Anordnung sehr schnell in den bezogen auf die Einlaßöffnung hinter dem Messerrad liegenden Raum und strömt von dort nach außen ab. Das Erntegut findet hinter dem Messerrad genügend freien Raum um ungehindert abströmen zu können; es wird jedoch durch die Radspeichen einerseits und durch die Hinterwand des Häckslergehäuses andererseits in Wirbelung versetzt. Durch die dadurch auftretende innere und äußere Reibung, besonders an der stillstehenden Fläche wird ein erheblicher Teil der eingesparten Energie wiederum aufgezehrt.

Aus der DEOS 33 20 507 ist ein Scheibenradhäcksler bekannt geworden, bei dem das Messerrad mit kleineren Wurfflügeln zum Austragen des Häckselgutes in eine Nachzerkleinerungsvorrichtung versehen ist, aus der das Häckselgut wieder in den Häcksler an der Rückseite des Messerrades eingetragen wird und von dort mit größeren ,an der Rückseite des Messerrades befestigten Wurfflügeln ausgetragen wird. Abgesehen von dem verfolgten Zweck der Vermahlung des Häckselgutes ist der spezifische Energieverbrauch dieser Anordnung schon wegen der mehrmaligen Beschleunigung des Erntegutes vergrößert und die Einleitung der Kräfte für die Wurfarbeit erfolgt ebenfalls ausschließlich in das Messerrad, das gleichzeitig eine Art Teilungsfunktion für das Gehäuse aufweist.

Bei allen vorerwähnten Häckslern erfolgt die Energieübertragung auf das Erntegut, sowohl für die Zerkleinerungsarbeit als auch für die Abführung desselben aus der Maschine durch Einleitung der Antriebskräfte in das Erntegut über das Häckselrad, das deshalb eine dementsprechend hohe Festigkeit und Steifigkeit aufweisen muß.

Bei den meisten Häckslern ist überdies noch eine Nachzerkleinerungsvorrichtung vorgesehen, die beispielsweise aus einer im Auswurfstutzen vorgesehen Walzenmühle bestehen kann, die mit dem ausgeworfenen Häckselgut beaufschlagt wird, dieses vermahlt und aus dem Auswurfkrümmer auswirft. Dabei ist bei den meisten bekannten Messerradhäckslern die dem Häckselgut mitgegebene Auswurfenergie für die Übergabe auf eine Walzenmühle unnötig hoch.

Soll die Durchsatzleistung an Erntegut bei diesen Maschinen gesteigert werden, so muß entweder der Durchmesser des Messerrades oder dessen Drehzahl erheblich vergrößert werden, was in jedem Fall zu schweren, aufwendigen Konstruktionen mit steigender Präzision führt, wobei sehr schnell die Grenzen des wirtschaftlich Sinnvollen überschritten sind.

Sollen Maschinen dieser Art einfacher und leichter gebaut werden, so sind dem eben solcherart enge Grenzen gezogen. Neben den schon erwähnten sehr hohen, stoßweisen Belastungen des Messerrades durch die Schnittkräfte der Messer treten noch die über den Messerradumfang und die Wurfvorrichtung übertragenen Beschleunigungskräfte von der Auswurfvorrichtung her auf, welche das Messerrad im Umfangbereich einer bedeutenden Wechselbelastung aussetzen, die durch die, bei den meist noch Verwendung findenden Nachzerkleinerungsvorrichtungen auftretenden, am Messerradumfang eingeleiteten zusätzlichen Kräfte verstärkt wird.

Aus der DE-P 691.505 ist eine Maschine zum Musen von Pflanzenteilen bekannt geworden, bei der in einem zylindrischen Gehäuse auf einer Welle mit einer Nabe aufgekeilt ein Scheibenrad angetrieben umläuft, an dessen der Zuführöffnung in der Stirnwand zugewandten Vordersseite etwa radial ausgerichtet Messer befestigt sind, die das Zerkleinerungsgut an einer Art Gegenschneide abschneiden.

Dieses Gut wird über den Außenrand des Scheibenrades in einen engen Reib-und Förderspalt abgegeben, der zwischen der vorderen Stirnwand des Gehäuses und einem scheibenförmigen Mahlrad gebildet ist, das sich auf der gleichen Nabe des Scheibenrades mitdreht und das mit hammerartigen Wurfflügeln versehen ist, die außerhalb des Mahlrades, bis zur Außenwand des Gehäuses reichend, umlaufen.

Der Nachteil dieser Anordnung ist, wie bereits ausgeführt, die verspätete Abgabe des Gutes in den Förderspalt, dessen Enge, sowie die außenliegenden Wurfflügel, die dem Gut die maximal mögliche Beschleunigung erteilen und damit unnötig Energie verbrauchen.

Aus der US-PS 2 767 753 ist ein Maishäcksler bekannt geworden, bei dem ein quadratisches Wurfrad mit einer Nabe auf einer Welle befestigt ist, wobei auf dieser Nabe in axialem Abstand in Richtung auf die Eintrittsöffnung für das Häckselgut sternförmige Arme eines Messerrades befestigt sind, an deren Vorderkanten Messer in Radialrichtung ausgerichtet verschraubt sind, die mit einer Gegenschneide in der Eintrittsöffnung in der Stirnwand des zylindrischen Gehäuses zusammenarbeiten. Das Wurfrad, das einen geringeren Außendurchmesser aufweist als dem Flugkreis der Messer entspricht, trägt an seinen äußersten Umfangsstellen Wurfflügel, die radial ausgerichtet sind.

Auch diese Anordnung, deren Förderspalt offenbar sehr reichlich bemessen ist und deren Durchtrittsöffnungen mehr als ausreichen, weist als wesentlichen Nachteil weit außenliegende Wurfflügel auf, die eine hohe Nachbeschleunigung des Häckselgutes garantieren und damit einen überhöhten Energieverbrauch, der für eine höhere Durchsatzleistung besser verwertet wäre.

In der DE-OS 2 160 737 wird ein Maishäcksler beschrieben, bei dem ein sternförmiges Messerrad mit etwa radial ausgerichteten Messern das zugeführte Erntegut häckselt und über einen dahinter liegenden, toroidal geformten Umlenkkörper einem hinter dem Messerrad angeordneten Zerkleinerungsrad, mit vor allem am Umfang angeordneten Zerkleinerungsorganen, zuführt, von denen das Häckselgut einem nachgeschaltetes oder ausgerichtetes Gebläse weitergeführt wird.

Diese Anordnung, die ansonsten nichts zur Erfindung beiträgt, zeigt einen Umlenkkörper, dessen Form an die Erfordernisse der Gutführung angepaßt ist.

Eine weitere, im Prüfverfahren noch angezogene Druckschrift ist das DE-GM 1 788 684, das allerdings getrennte Gebläse-und Schneidräder eines Schneidgebläses beschreibt, die auf voneinander getrennten Wellen angeordnet sind und zum Ausgleich von Fluchtungsfehlern mittels einer Art Klaue auf Mitnahme gekuppelt sind, wodurch es für die Übertragung größerer Drehmomente auf das angekuppelte Schneidrad ungeeignet ist und zudem die übliche Anordnung der Gebläseflügel eines Gebläses zeigt, wie sie für die Förderung von Heu geeignet sind, während sie für die Lösung von Förderproblemen bei Maishäckslern nicht Verwendung finden können.

Bei einem Messerradhäcksler nach dem Gattungsbegriff des Anspruches 1 wird durch die Merkmale des Anspruches 1 erreicht, daß das Messerrad von einem sehr erheblichen Teil der Belastungen an seinem Umfangbereich durch Verringerung der übertragenen Energie ohne Schmälerung der Durchsatzleistung oder der Zerkleinerungsleistung entlastet wird, und daß durch die Trennung von Schneiden und Austragen die Anpassung des Messerrades an das Schneiden des Erntegutes und die Anpassung des Wurfrades an das Fördern des Erntegutes unter Herabsetzung des spezifischen Energieverbrauches oder Niedrigerhaltung für den Bearbeitungsvorgang besser möglich ist, als nach dem Stand der Technik.

Die Unteransprüche, auf die hier ausdrücklich verwiesen wird, betreffen besonders vorteilhafte Ausgestaltungen der Erfindung, deren Merkmale die Anpassung des Messerrades und des Wurfrades an gesteigerte Anforderungen, insbesonders hinsichtlich Durchsatzleistung und spezifischen Energieverbrauch, in besonders günstiger Weise gestatten.

Die Herstellung einer günstigen Förderung des gehäckselten Erntegutes von den Schneiden der Messer an, bis in den Bereich der Auswurfvorrichtung, welche eine Senkung des dafür erforderlichen Energieverbrauches durch Herabsetzung des Strömungswiderstandes des Erntegutes durch Verringerung der inneren und äußeren Reibung desselben zum Ziel hat, ist durch abgestimmte Anwendung von Merkmalen der Unteransprüche auf unterschiedliche Messerradhäckslerkonstruktionen erreichbar. Besondere Bedeutung kommt dabei der Anordnung der Bauteile zueinander und deren Abmessungen, in Bezug auf die einstellbaren Schnittlängen, bis zu einer maximalen theoretischen Schnittlänge des Erntegutes zu, wobei die Abhängigkeit von der Art des Erntegutes günstigerweise dergestalt zu berücksichtigen ist, daß für Halmgut, wie Gras, gewöhnlich größere Abstände und Abmessungen zu berücksichtigen sind als für Mais.

Ebenso ist durch die Anwendung von Merkmalen der Unteransprüche auf die Gestaltung und Anordnung der Auswurfvorrichtung, sowie der Messer und der Schneidwinkel eine Herabsetzung des spezifischen Energieverbrauches möglich. Besondere Bedeutung kommt dabei der Ausgestaltung der Wurfflügel und ihrer Anordnung, sowie des Führungsteiles zu. Es kann durch die Anordnung und Gestaltung der Wurfflügel der Anteil des Energieverbrauches, für die Erzeugung eines Luftstromes, auf eine unbedingt erforderliche Höhe abgesenkt werden und die Belastung des Wurfrades dadurch weiter verringert werden. Durch die Gestaltung der Wurfflügel und ihrer Anordnung in dem Häckselgutstrom kann die Beschleunigung des Häckselgutes auf die Umfangeschwindigkeit des Wurfrades vermieden werden, besonders wenn wesentliche Anteile davon nicht mit der Scheibe des Wurfrades in Berührung treten können. Eine ganz ähnliche Einflußnahme ist durch eine sinngemäße Ausbildung und Anordnung des Führungsteiles erzielbar.

Bei getrennter Lagerung von Messerrad und Wurfrad mit getrennten Teilen der Radnabe ist es durch Wahl der Drehzahl des Messerrades und des Wurfrades unabhängig voneinander möglich, den spezifischen Energieverbrauch für den Häckselvorgang durch Erhöhung der Drehzahl des Messerrades und den spezifischen Energieverbrauch für den Auswurfvorgang durch Verringerung der Drehzahl des Wurfrades ganz bedeutend zu senken, was bei Häckslern, die für große Durchsatzleistungen gebaut sind, besonders günstige Ergebnisse bringt.

Im besonderen ist es von Vorteil, einen Förderspalt zwischen Messerrad und Wurfrad auszubilden, durch den das freie Abströmen des Häckselgutes bei geringer Durchwirbelung und Reibung an der Oberfläche des Wurf-und des Messerrades von statten geht und an den nicht bewegten Flächen des Häckslergehäuses vor dem Verlassen des Bereiches von Messerrad und Wurfrad durch das Häckselgut möglichst keine Reibung stattfindet.

Weitere vorteilhafte Ausgestaltungen betreffen die Ausbildung des Messerrades insbesondere in bezug auf Durchlaßöffnungen bei der Ausbildung als Scheibenrad oder in bezug auf Speichen bei Ausbildung als Speichenrad und die besondere Ausbildung des Messerrades je nach der Grundkonstruktion desselben, um besonders den Strom des Häckselgutes in diesem Bereich wirbelarm und damit energiesparend und ohne Herabsetzung der Durchsatzleistung zu ermöglichen.

Besonders günstig ist die Anwendung eines Führungsteiles im Förderspalt zur Umlenkung des Häckselgutstromes in den Auswurfstutzen, sowie dessen hiefür besonders geeignete Ausbildung, mit der noch eine weitere Absenkung der vom Häckselgut in diesem Bereich des Häckselwerkes aufgenommenen Energie erzielbar ist.

Weiters erweist sich die Anordnung, Ausbildung und Gestaltung der Wurfflügel als besonderer Vorteil, durch den ohne besonders gesteigerten Aufwand an Konstruktionsmitteln die Energieübertragung auf das Häckselgut gezielt und in verringertem Umfang gegenüber dem bisher Bekannten ermöglicht ist, so daß das Häckselgut nicht insgesamt auf die Umfangsgeschwindigkeit des Häckselwerkes beschleunigt werden muß, sondern auf ein Maß beschränkbar ist, das für den angestrebten Zweck ausreicht, sei es, daß eine nachgeordnete Walzenmühle beschickt werden soll oder das Häckselgut unmittelbar ausgeworfen werden soll.

Im einzelnen wird dieser Vorteil durch das Abwerfen des Häckselgutes von den Wurfflügeln innerhalb des Umfanges des Wurfrades erreicht. In ähnlicher Weise begünstigt die, in Bezug auf die Drehrichtung des Wurfrades zurückweichende Stellung der Wurfflügel einen rascheren, freien Abwurf des Häckselgutes wesentlich mehr als eine radiale Stellung der Wurfflügel.

Diese und die vorher erwähnten Maßnahmen begünstigen einander in besonderem Maße im Sinn einer Herabsetzung der Energieaufnahme des Häckselgutes und einer Verringerung des Verbrauches der dem Häckselgut innewohnenden Bewegungsenergie über den bezweckten Umfang hinaus.

Vorteilhaft ist es weiters, die Wurfflügel in Bezug auf die Lage und Anordnung der zugeordneten Messer und deren Schneiden an einer günstigen Stelle an der Scheibe des Wurfrades anzuordnen, den Verlauf der Wurfflügel festzulegen und deren Ausformung der Richtung und dem Umfang des von den Messern abströmenden Häckselgutes anzupassen, wobei die Ausrichtung der Wurfflügel zur Richtung des Häckselgutstromes von besonderer Bedeutung ist.

Eine sehr wirksame Absenkung der auf das Häckselgut übertragenen Energie ergibt sich bei Anordnung von Messerrad und Wurfrad auf getrennten Teilen der Radnabe, wodurch das Wurfrad mit geringerer Drehzahl umlaufend weniger Energie auf das Häckselgut überträgt, was besonders bei großen Mengen von erheblichem Vorteil ist, aber mit einem wesentlich größeren Bauaufwand verknüpft ist.

Die Erfindung wird im folgenden an Hand der in den Zeichnungen dargestellten Beispiele näher beschrieben.

In der Zeichnung zeigen:

Fig. 1 eine Seitenansicht eines Messerradhäckslers, schematisch,

Fig. 2 einen Radialschnitt senkrecht zur Häckslerwelle, bei einem Messerradhäcksler mit Scheibenrad,

Fig. 3 einen Axialteilausschnitt aus dem Häckselwerk nach Fig. 2,

Fig. 4 eine Teilansicht von Fig. 3 in axialer Richtung,

Fig. 5 einen Radialschnitt senkrecht zur Häckslerwelle, bei einem Messerradhäcksler mit Speichenrad,

Fig. 6 einen Axialteilausschnitt aus dem Häckselwerk nach Fig. 5,

Fig. 7 eine Teilansicht von Fig. 6 in axialer Richtung,

Fig. 8 einen Axialteilausschnitt aus einem Häckselwerk mit Führungsteil vor dem Wurfrad und

Fig. 9 eine Draufsicht auf die Fig.6, verebnet

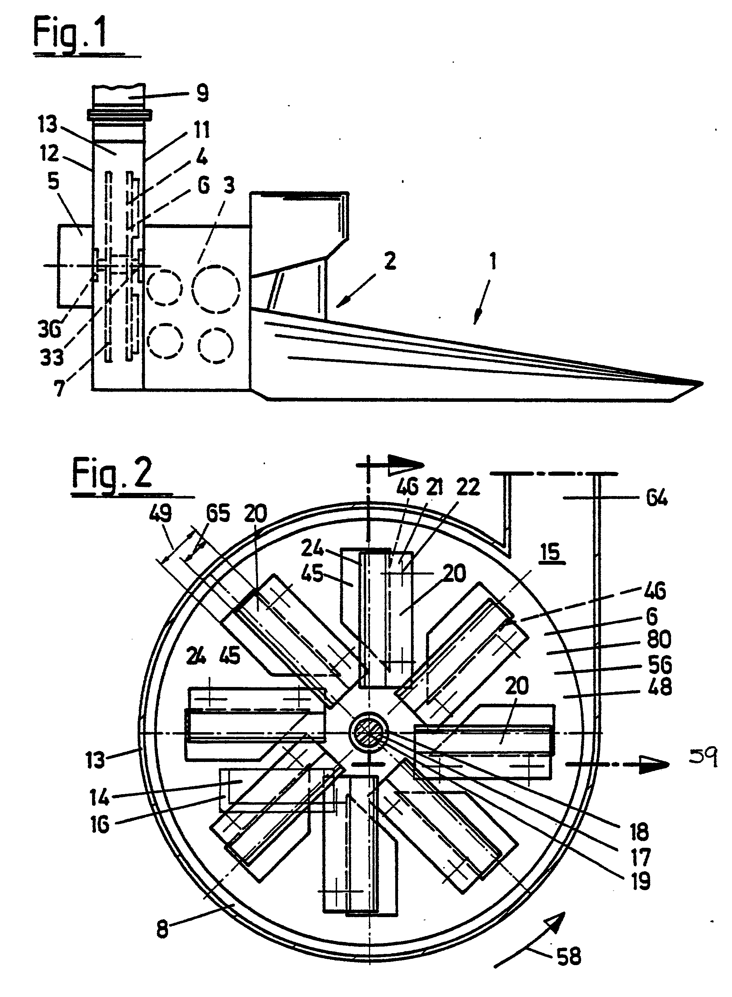

In Fig. 1 ist ein Feldhäcksler dargestellt, mit einer Aufnahmevorrichtung 1, einer sich daran anschließenden Abtrenn-und Einzugsvorrichtung 2 und einer Preßvorrichtung 3, die einer Häckselvorrichtung 4 mit Antriebsvorrichtung 5 vorgeschaltet sind. Die Preßwalzen der Preßvorrichtung 3 und das Häckselwerk der Häckselvorrichtung 4 sind angedeutet. Der Häckselvorrichtung 4 ist ein Auswurfkrümmer 9 nachgeordnet.

Die Häckselvorrichtung 4 besteht, wie aus Fig.2 ersichtlich, aus einem mit Messern 20 ausgestatteten Messerrad 6, das mit einer Radnabe 18 auf einer Häckslerwelle 17 befestigt ist und in einem Häckslergehäuse 8 angetrieben umläuft, dessen Außenwand 13 geschnitten dargestellt ist und mit einer Auslaßöffnung 15 versehen ist, die in einen Auswurfstutzen 64 führt, an den ein Auswurfkrümmer 9 angeflanscht ist (in Fig. 2 nicht dargestellt).

Vor dem Messerrad 6 ist die vordere Stirnwand 11 des Häckslergehäuses 8 angeordnet, die mit einer Einlaßöffnung 14 versehen ist, in der eine Gegenschneide 16 angebracht ist, mit der die Schneiden 24 der Messer 20 zusammenarbeiten.

Hinter dem Messerrad 6 ist auf der Häckslerwelle 17 ein Wurfrad 7 befestigt das die gleiche Drehachse 19 wie das Messerrad 6 besitzt und zusammen mit dem Messerrad 6 im gemeinsamen Häckslergehäuse 8 umläuft. Die Messerradwelle 17 ist in der vorderen Stirnwand 11 des Häckslergehäuses 8 mit einem vorderen Häckslerwellenlager 33 gelagert.

Mit dem anderen Ende ist die Häckslerwelle 17 mit dem hinteren Häckslerwellenlager 36 in der hinteren Stirnwand 12 gelagert (Fig.1). Die Häckslerwelle 17 ist über das hintere Häckslerwellenlager 36 hinaus verlängert und mit der Antriebsvorrichtung 5 gekuppelt (nicht dargestellt).

Das Messerrad 6 besteht aus einer Scheibe 80 , die in Fig. 2 z.B. mit acht Durchlaßöffnungen 45 versehen ist, an deren, in Drehrichtung 58 gesehen, Vorderkante 46 die Messer 20 angeordnet sind. Die Messer 20 sind mit Messerverschraubungen 22 (angedeutet) an Messerhaltern 21 befestigt, die ihrerseits mit Verschraubungen an der Vorderseite 56 des Messerrades 6 angeschraubt sind. Die Messer 20 sind in axialer Richtung des Messerrades 6 angestellt und reichen durch die Durchlaßöffnungen 45, eine Führung für das Erntegut bildend , hindurch. Die Länge 50 der Durchlaßöffnung 45 entspricht der Länge 60 der Messer 20 und reicht von den inneren Enden 55 bis zu den äußeren Enden 53 der Messer 20. Ihre Breite 49, die wenigstens die doppelte maximale Schnittlänge des Erntegutes beträgt, entspricht der Breite der Teile 65 der Messer 20, die die Vorderseite 56 des Messerrades 6 mit den Schneiden 24 in einem Abstand 47 von der Oberfläche 48 des Messerrades 6 überragen, der zumindest der maximalen theoretischen Schnittlänge des Erntegutes entspricht.

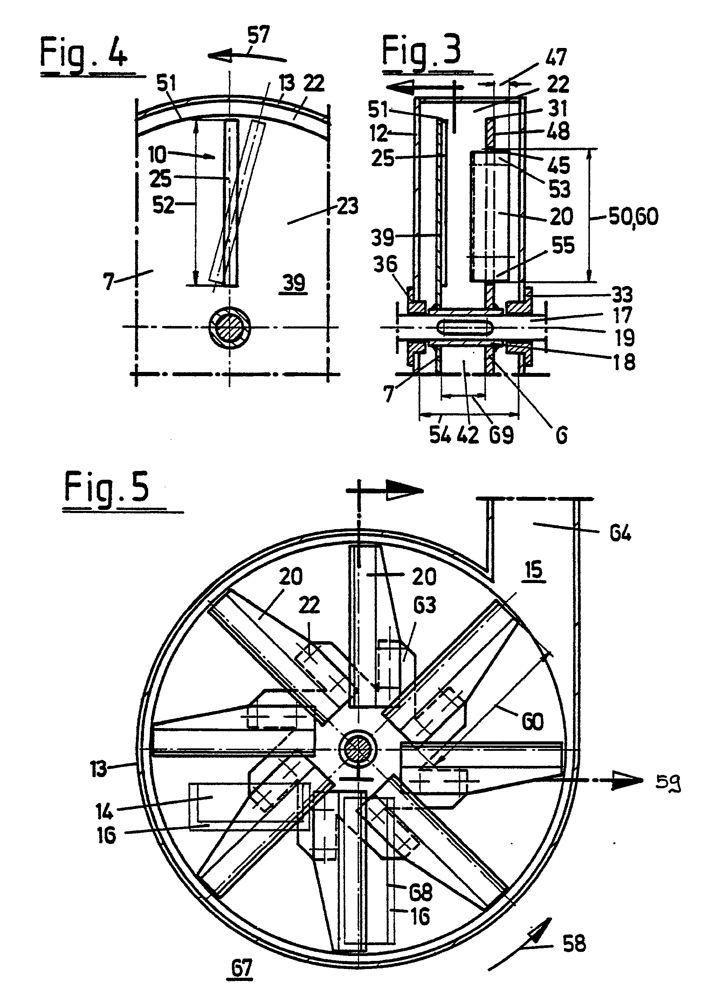

Bei einer weiteren Ausführungsform eines Messerrades 6 (Fig.5) ist die Radnabe 18 mit Speichen 63 versehen, deren Zahl jener der Messer 20 des Messerrades 6 entspricht, an denen die Messer 20 mit den Messerverschraubungen 22 (angedeutet) unmittelbar verschraubt sind. Die Messer 20 sind nur über etwa knapp die Hälfte ihrer Länge 60 an den Speichen 63 befestigt und ragen frei nach außen.

Messerrad 6 und Wurfrad 7 sind im Abstand voneinander auf einer Radnabe 18, einen Förderspalt 42 für das Erntegut bildend, angeordnet, der eine Breite 69 aufweist, die wenigstens dem Doppelten der maximalen Schnittlänge des Erntegutes, günstigerweise aber einem Mehrfachen derselben, entspricht.

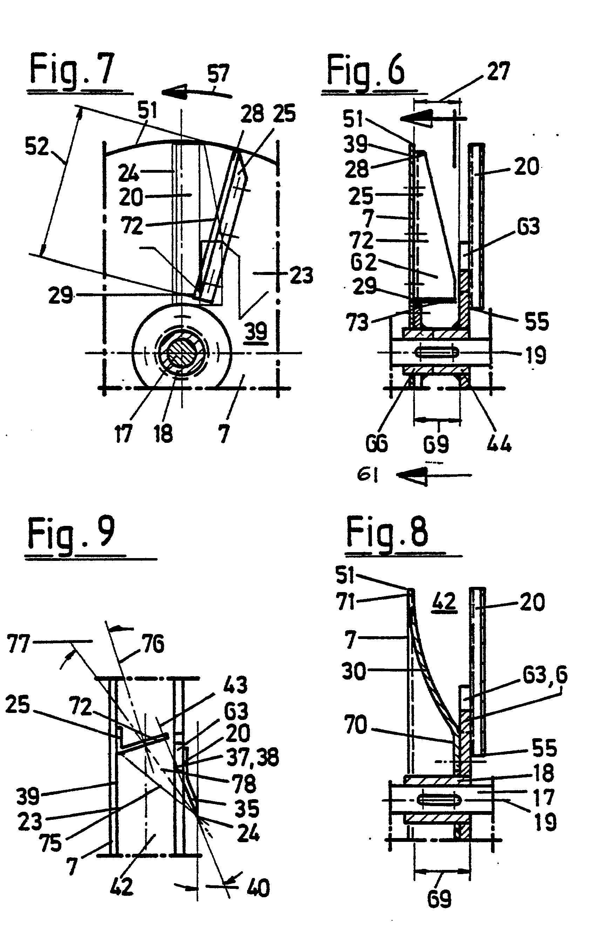

Das Wurfrad 7 besteht aus einer Scheibe 39 und trägt an seiner dem Messerrad 6 zugewandten Oberfläche 23 Wurfflügel 25 einer Auswurfvorrichtung 10. Diese Wurfflügel 25 sind radial zur Drehachse 19 verlaufend ausgerichtet. Für die Veränderung der Abwurfeigenschaften der Wurfflügel 25 können diese auch in Bezug auf die Drehrichtung 57 des Wurfrades 7 von innen nach außen zurückweichend gestellt sein (dünn gezeichnet in Fig. 4 und 7). Die Wurfflügel 25 können aus Stab- oder Winkelmaterial oder aber aus besonders geformten Teilen bestehen und es ist entweder jedem Messer 20 ein Wurfflügel 25 zugeordnet (Fig.9) oder es ist eine geringere Anzahl, wenigstens aber zwei Wurfflügel 25, vorgesehen, wenn die Anforderungen an den Transport des Häckselgutes im Häckselwerk und an das Auswurfverhalten nicht so hoch sind.

Die Wurfflügel 25 erstrecken sich in ihrer radialen Höhe 52 mit der Oberfläche 72 von ihren inneren Enden 29, die im Bereich innerhalb der inneren Enden 55 der Messer 20 liegen (Fig.3,4) oder mit einer Innenkante 73, die unter einem Winkel 79 von mehr als 45 Winkelgraden abgeschrägt ist, in Ebenen 34 durch die Drehachse 19 oder parallel zu den Schneiden 24 der Messer 20. Die Oberfläche 72 kann auch in Bezug auf die Drehrichtung 57 des Wurfrades 7 gesehen, von innen nach außen gegenüber der Schneide 24 des Messers 20 zurückgesetzt sein, um dadurch einen raschen Abwurf des Häckselgutes zu erreichen. Die Breite 27 der Wurfflügel 25 entspricht an den inneren Enden 29 und an den äußeren Enden 28 etwa der maximalen theoretischen Schnittlänge des Häckselgutes (Fig. 3).

Bei einer anderen Ausführungsform überdeckt die Breite 27 des inneren Teiles 62 der Wurfflügel 25 die Breite 69 des Förderspaltes 42 und verringert sich linear bis an die äußeren Enden 28 mit denen die Wurfflügel 25 am Umfang 51 der Scheibe 39 des Wurfrades 7 enden.

Die Oberfläche 72 des Wurfflügels 25 ist bei einer Ausführungsform zu der Schneide 24 des Messers 20 so ausgerichtet, daß sie einen Winkel 77 zur Senkrechten mit der Oberfläche 23 des Wurfrades 7 einnimmt, der dem Winkel 77 der mittleren Ebene 78 des Häckselgutstromes durch die Schneide 24 entspricht. Die Anordnung des Wurfflügels 25 in Zuordnung zum Messer 20 ist dabei so getroffen, daß der vom Messer 20 zwischen der, an die Oberfläche 35 des Messers 20 oder die Oberfläche 37 der Leitfläche 38 angelegten Ebene 43 und der den Häckselgutstrom begrenzenden Ebene 75 abfließende Häckselgutstrom die Oberfläche 72 des Wurfflügels 25 trifft. Dadurch erhält der Häckselgutstrom jene Geschwindigkeit mitgeteilt, die der Wurfflügel 25 an der Auftreffstelle besitzt.

Die Ebene 43 an die Oberfläche 35 des Messers 20 nimmt mit der Radialebene 41 durch die Schneiden der Messer 20 einen Winkel 40 von 22 bis 25 Winkelgraden ein, der im Bereich zwischen 20 und 30 Winkelgraden abgewandelt werden kann.

In besonderer Anpassung an den Häckselgutstrom kann die Oberfläche 72 konkav gekrümmt ausgebildet sein (nicht dargestellt).

Der Raum 32 zwischen dem Umfang 31 des Messerrades 6 und dem Umfang 51 des Wurfrades 7 und über die Breite 54 der Außenwand 13 ist gering gehalten und wird von den als Räumkanten ausgebildeten äußeren Enden 28 der Wurfflügel 25 bestrichen um Verstopfungen zu unterbinden (nicht dargestellt).

Die Führung des Häckselgutstromes ist bei einer anderen Ausführungsform durch einen Führungsteil 3O erzwungen, der sich über die Breite 69 des Förderspaltes 42 erstreckt, wobei der innere Teil 7O im Bereich der inneren Enden 55 der Messer 2O und der äußere Teil 71 am Umfang 51 des Wurfrades 7 befestigt ist. Der Führungsteil 3O weist einen parabolisch konkav gekrümmten Verlauf zwischen seinem inneren 7O und seinem äußeren Teil 71 auf, durch den das Häckselgut eine stetige Umlenkung in Richtung auf den Auswurfstutzen 64 erfährt (Fig. 8).

In einer vereinfachten Ausbildung kann der Führungsteil 3O mit einem kegeligen Verlauf ausgebildet sein. Der Führungsteil 3O kann in der vorbeschriebenen Weise mit Wurfflügeln 25 versehen sein (nicht dargestellt). Es ist sogar möglich die Scheibe 39 des Wurfrades 7 fortzulassen und den Führungsteil 3O mit höherer Festigkeit zu versehen und mit dem Messerrad 6 in dessen Nabenbereich zu verschrauben (Fig.8).

Wie schon eingangs beschrieben ist an der vorderen Stirnwand 11 des Häckslergehäuses 8 die Gegenschneide 16 an der Einlaßöffnung 14 angeordnet. Die Gegenschneide 16 ist je nach Lage der Einlaßöffnung 14 waagerecht oder lotrecht angeordnet (Fig.5) Bei Anordnung der Einlaßöffnung 14 und der Gegenschneide 16 näher am Auswurfstutzen 64 ist die Gegenschneide 16 in einer zum Erdboden 67 lotrechten Ebene 68 durch oder parallel zur Drehachse 19 des Messerrades 6 und des Wurfrades 7 angeordnet.

Der bei dieser Ausführungsform kurze Weg des Häckselgutes in den Auswurfstutzen 64 begünstigt die, in Bezug zur Drehrichtung 58 gegen die Schneiden 24 der Messer 2O zurückgestellte Anordnung der Oberfläche 72 der Wurfflügel 25 zusätzlich, so daß diese Anordnung, im Hinblick auf eine Verringerung der dem Häckselgut aufgegebenen Wurfenergie eine besonders günstige Wirkung aufweist.

Bei einer anderen Ausführungsform ist die Radnabe 18 aus zwei Teilen 44,66 gebildet, von denen der erste Teil 44 das Messerrad 6 und der zweite Teil 66 das Wurfrad 7 trägt. Der zweite Teil 66 der Radnabe 18 läuft bei dieser Anordnung mit bis auf die Hälfte oder ein Drittel der Umdrehungszahl des ersten Teiles 44 der Radnabe 18 verringerter Umdrehungszahl, was die dem Häckselgut aufgegebene Wurfenergie sehr wirksam herabsetzt.

Das Häckselgut gelangt von den Messern 2O durch die Durchlaßöffnungen 45 oder zwischen den Speichen 63 in den Förderspalt 42 und wird möglichst frühzeitig von den Oberflächen 72 der Wurfflügel 25 erfaßt und auf die jeweilige Umfangsgeschwindigkeit beschleunigt und durch die Stellung der Oberflächen 72 durch den Förderspalt 42 nach außen in den Auswurfstutzen 64 abgegeben. Bei Anordnung eines Führungsteiles 3O übernimmt dessen Oberfläche wenigstens zum Teil eine Förder- und Umlenkaufgabe in der vorbeschriebenen Weise.

Zusammen mit einer Anordnung der Gegenschneide 16 nahe am Auswurfstutzen 64 ergibt sich eine besonders energiesparende Förderung des Häckselgutes in den Auswurfstutzen.

## Patentansprüche

1. Messerradhäcksler mit einem Häckslergehäuse (8), mit einer Einlaßöffnung (14) in dessen vorderer Stirnwand (11) und einer Auslaßöffnung (15) in dessen Außenwand (13), in dem ein Messerrad (6), mit einer Radnabe (18) auf einer Häckslerwelle (17) befestigt, angetrieben umlaufend gelagert ist, das an seiner, der Einlaßöffnung (14) zugewandten Vorderseite (56) mit fest angebrachten Messern (20) versehen ist, deren radial verlaufende Schneiden (24) in einer Ebene, senkrecht auf die Häckslerwelle (17) liegend, mit einer Gegenschneide (16) an der Einlaßöffnung (14) zusammenarbeiten und ein im wesentlichen als volle Scheibe ausgebildetes Wurfrad (7), das auf der gleichen Radnabe (18) in einem axialen Abstand zum Messerrad (6) befestigt, auf der Häckslerwelle (17) in gleicher Drehrichtung (57, 58) angetrieben umläuft und dessen Auswurfvorrichtung (10) das gehäckselte Gut durch die Auslaßöffnung (15) befördert, wobei zwischen den Schneiden (24) der Messer (20)und dem Messerrad (6) Durchlaßöffnungen (45) und zwischen dem Messerrad (6) und dem Wurfrad (7) ein Förderspalt (42) gebildet sind (ist), die einem Mehrfachen der Schnittlänge des Erntegutes entsprechen, dadurch gekennzeichnet, daß die Auswurfvorrichtung (10) aus wenigstens zwei, an der dem Messerrad (6) zugewandten Oberfläche fest angebrachten Wurfflügeln (25) besteht, die im wesentlichen in radialer Richtung (59) ausgerichtet sind und wenigstens von den inneren Enden (55) der Messer (20) bis wenigstens zum äußeren Ende (53) der Messer (20) reichen und dabei das Wurfrad (7) nicht oder nur gerinfügig nach außen überragen und den Förderspalt (42) in axialer Richtung (61)zumindest in einer Breite (27) überdecken, die der maximalen theoretischen Schnittlänge des Häckslers entspricht.

2. Messerradhäcksler nach Anspruch 1, dadurch gekennzeichnet, daß jedem Messer (20), wenigstens aber jedem zweiten Messer (20), ein Wurfflügel (25) des Wurfrades (7) zugeordnet ist.

3. Messerradhäcksler nach Anspruch 1 oder 2, dadurch gekennzeichnet, daß die Wurfflügel (25) in Bezug auf die Drehrichtung (57) des Wurfrades (7) und vorzugsweise auch gegenüber den Schneiden (24) der zugeordneten Messer (20) von innen nach außen nacheilend angeordnet sind.

4. Messerradhäcksler nach einem der vorhergehenden Ansprüche, dadurch gekennzeichnet, daß die Wurfflügel (25) parallel zu den Schneiden (24) der zugeordneten Messer. (20) verlaufend angeordnet sind.

5. Messerradhäcksler nach einem der vorhergehenden Ansprüche, dadurch gekennzeichnet, daß die Wurfflügel (25) nach außen zu in ihrer, in axialer Richtung (61) gemessenen Breite (27), vorzugsweise linear, abnehmen.

6. Messerradhäcksler nach einem der vorhergehenden Ansprüche, dadurch gekennzeichnet, daß die Wurfflügel (25) an ihren äußeren Enden (28) in axialer Richtung (61) mindestens eine Breite (27) aufweisen, die der maximalen theoretischen Schnittlänge des Häckslers entspricht und an ihren inneren Enden (29) eine Breite (27) aufweisen, die einem Mehrfachen der maximalen theoretischen Schnittlänge des Häckslers entspricht.

7. Messerradhäcksler nach einem der vorhergehenden Ansprüche, dadurch gekennzeichnet, daß die Wurfflügel (25) an den Innenkanten (73) unter einem Winkel (79) von wenigtens 45 Grad abgeschrägt zur Oberfläche (23) des Wurfrades (7), zu dieser zurück verlaufend ausgebildet oder gerundet sind.

8. Messerradhäcksler nach Anspruch 1, dadurch gekennzeichnet, daß zwischen Messerrad (6) und Wurfrad (7) ein den Förderspalt (42) überdeckender Führungsteil (30) angeordnet ist, der mit seinem inneren Teil (70) im wesentlichen im Bereich der inneren Enden (55) der Messer (20) beginnend, mit seinem äußeren Teil (71) im wesentlichen bis in den Bereich der äußeren Enden (53) der Messer (20) reichend, einen sich von innen nach außen verbreiternden Förderspalt (42) bildend, verlaufend geformt ist und vorzugsweise bis an den Umfang (51) des Wurfrades (7) geführt ist.

9. Messerradhäcksler nach Anspruch 1 oder 8, dadurch gekennzeichnet, daß der Führungsteil (30) wenigstens an der Radnabe des Messerrades (6) und des Wurfrades (7) befestigt ist.

10. Messerradhäcksler nach einem der Ansprüche 1, 8 oder 9, dadurch gekennzeichnet, daß der Führungsteil (30) einen Kegelmantel oder eine Paraboloidfläche bildend geformt ist.

11. Messerradhäcksler nach einem der Ansprüche 1 oder 8 bis 10, dadurch gekenzeichnet, daß die Wurfflügel (25) auf dem Führungsteil (30) angeordnet sind.

12. Messerradhäcksler nach einem der vorhergehenden Ansprüche, dadurch gekennzeichnet, daß der einem Messer (20) zugeordnete Wurfflügel (25), im Bereich hinter diesem Messer (20) auf der Scheibe (39) oder auf dem Führungsteil (30) des Wurfrades (7) so angeordnet ist, daß seine Oberfläche (72) von einer, an die Oberfläche (35) des Messers (20) oder an die Oberfläche (37) einer Leitfläche (38) desselben angelegten Ebene (43) und von einer durch die Schneiden (24) des zugeordneten Messers (20) gehenden, den Häckselgutstrom im wesentlichen begrenzenden Ebene (75) geschnitten wird.

13. Messerradhäcksler nach einem der vorhergehenden Ansprüche, dadurch gekennzeichnet, daß die Ebene (43) einen Winkel (40) mit der durch die Schneiden (24) der Messer (20) gehende Radialebene (41) einnimmt, der mehr als 20, weniger als 30 Winkelgrade, vorzugsweise mehr als 22 und weniger als 25 Winkelgrade beträgt.

14. Messerradhäcksler nach einem der vorhergehenden Ansprüche, dadurch gekennzeichnet, daß jeder Wurfflügel (25) an der Oberfläche (72) derart geformt ist, daß die um das Lot (76) auf die Oberfläche (72) gespiegelten, durch die Schneide (24) des Messers (20) in Richtung des Häckselgutstromes verlaufenden Ebenen (43, 75) den Umfang (51) des Wurfrades (7) im wesentlichen innerhalb des Förderspaltes (42) verlassen.

15. Messerradhäcksler nach einem der vorhergehenden Ansprüche, dadurch gekennzeichnet, daß die Oberfläche (72) des Wurfflügels (25) in Bezug auf die Drehrichtung (57) des Wurfrades (7) um den Winkel (77) zur Senkrechten auf die Oberfläche (23) des Wurfrades (7) zurückgestellt ist, den die mittlere Ebene (78) des Häckselgutstromes durch die Schneide (24) des zugeordneten Messers (20) mit dem Lot (76) auf die Oberfläche (72) des Wurfflügels (25) bildet.

16. Messerradhäcksler nach Anspruch 1, dadurch gekennezeichnet, daß die Durchlaßöffnungen (45) des Messerrades (6), die im wesentlichen radial verlaufen, von den inneren Enden (53) der Messer (20) an nach außen reichen und eine Breite (49) aufweisen, die wenigstens dem Doppelten der maximalen theoretischen Schnittlänge entspricht.

17. Messerradhäcksler nach Anspruch 1 oder 2, dadurch gekennzeichnet, daß die Messer (20) an den, in Drehrichtung (58) des Messerrades (6) gesehenen Vorderkanten (46), vor denen die Durchlaßöffnungen (45) liegen, angebracht sind und Führungen für das gehäckselte Erntegut in den Förderspalt (42) bilden.

18. Messerradhäcksler nach einem der vorhergehenden Ansprüche, dadurch gekennzeichnet, daß das Messerrad (6) als Speichenrad ausgebildet ist, dessen Speichen (63) eine geringere, vorzugsweise weniger als die halbe radiale Erstreckung (74) aufweisen, als der Länge (60) der Messer (20) entspricht.

19. Messerradhäcksler nach einem der vorhergehenden Ansprüche, dadurch gekennzeichnet, daß das Messerrad (6) mit Speichen (63) versehen ist, an denen die Messer (20) unmittelbar befestigbar sind.

20. Messerradhäcksler nach einem der vorhergehenden Ansprüche 1 bis 17, dadurch gekennzeichnet, daß das Messerrad (6) eine Radnabe (18) aufweist, die mit einem Flansch ausgebildet ist, an dem Messerhalter (21), vorzugsweise mit Verschraubung, befestigbar sind, auf denen die Messer (20) ihrerseits befestigt sind.

21. Messerradhäcksler nach einem der vorhergehenden Ansprüche, dadurch gekennzeichnet, daß die Radnabe (18) aus zwei Teilen (44, 66) besteht, von denen der erste Teil (44) das Messerrad (6) und der zweite Teil (66) das Wurfrad (7) trägt, wobei einer der beiden Teile (44, 66), vorzugsweise der zweite Teil (66), auf der Häcklerwelle (17) frei drehbar gelagert ist und in gleicher Drehrichtung (57, 58) und mit geringerer Umdrehungszahl angetrieben ist als der erste Teil (44).

**Claims**

1. Rotary straw cutter with a cutter housing (8), comprising an inlet opening (14) in its front end wall (11) and an outlet opening (15) in its outer wall (13), in which housing a chopper wheel (6), which is secured to a cutter shaft (17) by a hub (18), is rotatably mounted and is provided at its front (56), which faces the inlet opening (14), with rigidly attached choppers (20), the radially extending cutting edges (24) of which in one plane, disposed perpendicular to the cutter shaft (17), cooperate with a counter cutting edge (16) at the inlet opening (14), and a rotating head (7), which is essentially formed as a solid disk, is secured to the same hub (18) at an axial spacing from the chopper wheel (6), rotates on the cutter shaft (17) in the same direction of rotation (57, 58) and the ejection device (10) of which conveys the cut crop through the outlet opening (15), through-openings (45) being formed between the cutting edges (24) of the choppers (20) and the chopper wheel (6) and a feed gap (42) between the chopper wheel (6) and the rotating head (7), these corresponding to a multiple of the cut length of the harvested crop, characterised in that the ejection device (10) consists of at least two impeller blades (25), which are rigidly attached to the surface which faces the chopper wheel (6), are directed essentially in the radial direction (59) and extend at least from the inner ends (55) of the choppers (20) to at least the outer end (53) of the choppers (20), the rotating head (7) not projecting outwards, or only slightly, and covering the feed gap (42) in the axial direction (61) at least over a width (27) which corresponds to the maximum theoretical length of cut of the cutter.

2. Rotary straw cutter according to claim 1, characterised in that an impeller blade (25) of the rotating head (7) is associated with each chopper (20), or at least each second chopper (20).

3. Rotary straw cutter according to claim 1 or 2, characterised in that the impeller blades (25) are arranged in a trailing manner from the inside outwards with respect to the direction of rotation (57) of the rotating head (7) and preferably also with respect to the cutting edges (24) of the associated choppers (20).

4. Rotary straw cutter according to one of the preceding claims, characterised in that the impeller blades (25) are arranged parallel to the cutting edges (24) of the associated choppers (20).

5. Rotary straw cutter according to one of the preceding claims, characterised in that the width (27), measured in the axial direction (61), of the impeller blades (25) decreases outwards, preferably in a linear manner.

6. Rotary straw cutter according to one of the preceding claims, characterised in that the width (27) of the impeller blades (25) at their outer ends (28) in the axial direction (61) corresponds at least to the maximum theoretical length of cut of the cutter, while their width (27) at their inner ends (29) corresponds to a multiple of the maximum theoretical length of cut of the cutter.

7. Rotary straw cutter according to one of the preceding claims, characterised in that the impeller blades (25) slope back at the inner edges (73) to the surface (23) of the rotating head (7) at an angle (79) of at least 45 degrees, or they are rounded.

8. Rotary straw cutter according to claim 1, characterised in that a guide part (30), which covers the feed gap (42), is arranged between the chopper wheel (6) and the rotating head (7) and, with its inner part (70) starting essentially in the area of the inner ends (55) of the choppers (20) and its outer part (71) reaching essentially into the area of the outer ends (53) of the choppers (20), is continuously shaped, forming a feed gap (42) which widens from the inside outwards, and preferably leads up to the circumference (51) of the rotating head (7).

9. Rotary straw cutter according to claim 1 or 8, characterised in that the guide part (30) is secured at least to the hub of the chopper wheel (6) and of the rotating head (7).

10. Rotary straw cutter according to one of claims 1, 8 or 9, characterised in that the guide part (30) is shaped so as to form a conical shell or a paraboloid surface.

11. Rotary straw cutter according to one of claims 1 or 8 to 10, characterised in that the impeller blades (25) are arranged on the guide part (30).

12. Rotary straw cutter according to one of the preceding claims, characterised in that the impeller blade (25) which is associated with one chopper (20) is arranged in the area behind this chopper (20) on the disk (39) or onthe guide part (30) of the rotating head (7) such that its surface (72) is intersected by a plane (43), which joins the surface (35) of the chopper (20) or the surface (37) of a deflector face (38) of the same, and by a plane (75), which essentially defines the flow of chopped straw and passes through the cutting edges (24) of the associated chopper (20).

13. Rotary straw cutter according to one of the preceding claims, characterised in that the plane (43) forms an angle (40) with the radial plane (41) passing through the cutting edges (24) of the choppers (20), which angle is greater than 20 and smaller than 30 angular degrees, preferably greater than 22 and smaller than 25 angular degrees.

14. Rotary straw cutter according to one of the preceding claims, characterised in that each impeller blade (25) is shaped at the surface (72) such that the planes (43, 75), which are reflected about the perpendicular (76) onto the surface (72) and extend through the cutting edge (24) of the chopper (20) in the direction of the flow of chopped straw, leave the cicumference (51) of the rotating head (7) essentially inside the feed gap (2).

15. Rotary straw cutter according to one of the preceding claims, characterised in that the surface (72) of the impeller blade (25) is set back with respect to the direction of rotation (57) of the rotating head (7) by the angle (77) at the perpendicular onto the surface (23) of the rotating head (7), which angle forms with the perpendicular (76) onto the surface (72) of the impeller blade (25) the central plane (78) of the flow of chopped straw through the cutting edge (24) of the associated chopper (20).

16. Rotary straw cutter according to claim 1, characterised in that the through-openings (45) in the chopper wheel (6), which extend essentilly radially, reach outwards from the inner ends (53) of the choppers (20) and are of a width (49) which corresponds to at least twice the maximum theoretical length of cut.

17. Rotary straw cutter according to claim 1 or 2, characterised in that the choppers (20) are attached to the front edges (46), viewed in the direction of rotation (58) of the chopper wheel (6), in front of which the through-openings (45) are disposed, and form guides for the cut crop into the feed gap (42).

18. Rotary straw cutter according to one of the preceding claims, characterised in that the chopper wheel (6) is formed as a spoked wheel, the extent of whose spokes (63) is less, preferably less than half the radial extent (74), than the length (60) of the choppers (20).

19. Rotary straw cutter according to one of the preceding claims, characterised in that the chopper wheel (6) is provided with spokes (63), to which the choppers (20) can be directly secured.

20. Rotary straw cutter according to one of the preceding claims 1 to 17, characterised in that the chopper wheel (6) comprises a hub (18) which is formed with a flange, to which chopper holders (21) can be secured, preferably by means of a screw connection, to which holders the choppers (20) can in turn be secured.

21. Rotary straw cutter according to one of the preceding claims, characterised in that the hub (18) consists of two parts (44, 66), the first part (44) of which bears the chopper wheel (6) and the second part (66) the rotating head (7), one of the two parts (44, 66), preferably the second part (66), being mounted such that it can rotate freely on the cutter shaft (17) and being driven in the same direction of rotation (57, 58) as the first part (44) and at a lower speed than the latter.

**Revendications**

1. Hacheuse à roue porte-lames, présentant un carter (8) percé d'un orifice d'admission (14) dans sa paroi extrême antérieure (11) et d'un orifice de sortie (15) dans sa paroi extérieure (13), carter dans lequel une roue (6) porte-lames, calée par un moyeu (18) sur un arbre (17) de la hacheuse, est montée avec entraînement en rotation et est pourvue, sur son côté antérieur (56) tourné vers l'orifice d'admission (14), de lames (20) qui sont installées de manière fixe et dont les tranchants (24) s'étendant radialement coopèrent, dans un plan perpendiculaire à l'arbre (17) de la hacheuse, avec une contre-lame (16) située sur l'orifice d'admission (14), ainsi qu'une roue projeteuse (7) qui est réalisée pour l'essentiel sous la forme d'un disque plein, est fixée sur le même moyeu (18), à distance axiale de la roue (6) porte-lames, est entrainée dans le même sens de rotation (57, 58) sur l'arbre (17) de la hacheuse, et dont le dispositif d'éjection (10) achemine le produit haché à travers l'orifice de sortie (15), hacheuse dans laquelle, entre les tranchants (24) des lames (20) et la roue (6) porte-lames, et entre cette roue (6) porte-lames et la roue projeteuse (7), sont (est) respectivement formé(s) des orifices de passage (45) et un interstice de convoyage (42) qui correspondent à un multiple de la longueur de coupe du produit récolté, caractérisée par le fait que le dispositif d'éjection (10) se compose d'au moins deux ailettes de projection (25) qui sont installées rigidement à la face supérieure tournée vers la roue (6) porte-lames, sont orientées pour l'essentiel dans le sens radial (59), s'étendent au moins des extrémités internes (55) des lames (20) jusqu'à au moins l'extrémité externe (53) desdites lames (20), ne font alors saillie vers l'extérieur, au-delà de la roue projeteuse (7), d'aucune distance ou seulement d'une faible distance, et recouvrent l'interstice de convoyage (42), dans le sens axial (61), selon au moins une largeur (27) qui correspond à la longueur théorique maximale de coupe de la hacheuse.

2. Hacheuse à roue porte-lames selon la revendication 1, caractérisée par le fait qu'une ailette de projection (25) de la roue projeteuse (7) est associée à chaque lame (20), au moins à une lame (20) sur deux.

3. Hacheuse à roue porte-lames selon la revendication 1 ou 2, caractérisée par le fait que les ailettes de projection (25) sont disposées avec retrait de l'intérieur vers l'extérieur par rapport au sens de rotation (57) de la roue projeteuse (7), et de préférence aussi par rapport aux tranchants (24) des lames associées (20).

4. Hacheuse à roue porte-lames selon l'une des revendications précédentes, caractérisée par le fait que les ailettes de projection (25) sont disposées en s'étendant parallèlement aux tranchants (24) des lames associées (20).

5. Hacheuse à roue porte-lames selon l'une des revendications précédentes, caractérisée par le fait que, mesurée dans le sens axial (61), la largeur (27) des ailettes de projection (25) décroît vers l'extérieur, de préférence linéairement.

6. Hacheuse à roue porte-lames selon l'une des revendications précédentes, caractérisée par le fait que les ailettes de projection (25) présentent à leurs extrémités externes (28), dans le sens axial (61), au moins une largeur (27) qui correspond à la longueur théorique maximale de coupe de la hacheuse et, à leurs extrémités internes (29), une largeur (27) qui correspond à un multiple de la longueur théorique maximale de coupe de la hacheuse.

7. Hacheuse à roue porte-lames selon l'une des revendications précédentes, caractérisée par le fait que, sur les arêtes internes (73), les ailettes de projection (25) sont arrondies ou sont réalisées biseautées selon un angle (79) d'au moins 45 degrés par rapport à la face supérieure (23) de la roue projeteuse (7), avec retrait par rapport à cette dernière.

8. Hacheuse à roue porte-lames selon la revendication 1, caractérisée par le fait qu'une pièce de guidage (30) recouvrant l'interstice de convoyage (42), disposée entre la roue (6) porte-lames et la roue projeteuse (7), débute pour l'essentiel par sa partie interne (70) au voisinage des extrémités internes (55) des lames (20), s'étend pour l'essentiel par sa partie externe (71) jusqu'au voisinage des extrémités externes (53) desdites lames (20), est configurée de manière à s'étendre en formant un interstice de convoyage (42) s'élargissant de l'intérieur vers l'extérieur, et se prolonge de préférence jusqu'au pourtour (51) de la roue projeteuse (7).

9. Hacheuse à roue porte-lames selon la revendication 1 ou 8, caractérisée par le fait que la pièce de guidage (30) est fixée au moins au moyeu de la roue (6) porte-lames et de la roue projeteuse (7).

10. Hacheuse à roue porte-lames selon l'une des revendications 1, 8 ou 9, caractérisée par le fait que la pièce de guidage (30) est configurée en formant une enveloppe conique ou une surface parabolique.

11. Hacheuse à roue porte-lames selon l'une des revendications 1 ou 8 à 10, caractérisée par le fait que les ailettes de projection (25) sont disposées sur la pièce de guidage (30).

12. Hacheuse à roue porte-lames selon l'une des revendications précédentes, caractérisée par le fait que l'ailette de projection (25) associée à une lame (20) est disposée, dans la région située derrière cette lame (20), sur le disque (39) ou sur la pièce de guidage (30) de la roue projeteuse (7), de telle sorte que sa face supérieure (72) soit coupée par un plan (43) qui passe par la face supérieure (35) de la lame (20) ou par la face supérieure (37) d'une surface déflectrice (38) de cette dernière, et par un plan (75) qui délimite pour l'essentiel le flux de produit haché, et passe par les tranchants (24) de la lame associée (20).

13. Hacheuse à roue porte-lames selon l'une des revendications précédentes, caractérisée par le fait que le plan (43) forme, avec le plan radial (41) passant par les tranchants (24) des lames (20), un angle (40) qui mesure plus de 20, moins de 30 degrés, de préférence plus de 22 et moins de 25 degrés.

14. Hacheuse à roue porte-lames selon l'une des revendications précédentes, caractérisée par le fait que chaque ailette de projection (25) est configurée, à la face supérieure (72), de telle sorte que les plans (43, 75) spéculaires autour de la perpendiculaire (76) à la face supérieure (72), et passant par le tranchant (24) de la lame (20) en direction du flux de produit haché, sortent du pourtour (51) de la roue projeteuse (7) pour l'essentiel à l'intérieur de l'interstice de convoyage (42).

15. Hacheuse à roue porte-lames selon l'une des revendications précédentes, caractérisée par le fait que, par rapport au sens de rotation (57) de la roue projeteuse (7), la face supérieure (72) de l'ailette de projection (25) est en retrait, par rapport à la perpendiculaire à la face supérieure (23) de la roue projeteuse (7), de l'angle (77) qui est formé par le plan médian (78) du flux de produit haché, passant par le tranchant (24) de la lame associée (20), avec la perpendiculaire (76) à la face supérieure (72) de l'ailette de projection (25).

16. Hacheuse à roue porte-lames selon la revendication 1, caractérisée par le fait que les orifices de passage (45) de la roue (6) porte-lames, qui s'étendent pour l'essentiel radialement, se prolongent vers l'extérieur à partir des extrémités internes (53) des lames (20), et présentent une largeur (49) qui correspond au moins au double de la longueur théorique maximale de coupe.

17. Hacheuse à roue porte-lames selon la revendication 1 ou 2, caractérisée par le fait que les lames (20) sont implantées sur les arêtes (46) qui se trouvent à l'avant considérées par rapport au sens de rotation (58) de la roue (6) porte lames, et devant lesquelles les orifices de passage (45) sont pratiqués, et forment des guides pour le produit récolté haché, jusque dans l'interstice de convoyage (42).

18. Hacheuse à roue porte-lames selon l'une des revendications précédentes, caractérisée par le fait que la roue (6) porte-lames est réalisée sous la forme d'une roue à rayons dont les rayons (63) présentent une longueur plus faible que la longueur (60) des lames (20), représentant de préférence moins de la demi-étendue radiale (74).

19. Hacheuse à roue porte-lames selon l'une des revendications précédentes, caractérisée par le fait que la roue (6) porte-lames est pourvue de rayons (63) auxquels les lames (20) peuvent être directement fixées.

20. Hacheuse à roue porte-lames selon l'une des revendications précédentes 1 à 17, caractérisée par le fait que la roue (6) porte-lames présente un moyeu (18) qui est pourvu d'une bride à laquelle peuvent être fixés, de préférence par vissage, des porte-lames (21) sur lesquels les lames (20) sont à leur tour fixées.

21. Hacheuse à roue porte-lames selon l'une des revendications précédentes, caractérisée par le fait que le moyeu (18) se compose de deux parties (44, 66) parmi lesquelles la première partie (44) et la seconde partie (66) portent, respectivement, la roue (6) porte-lames et la roue projeteuse (7), l'une des deux parties (44, 66), de préférence la seconde partie (66), étant montée à rotation libre sur l'arbre (17) de la hacheuse, et étant entraînée dans le même sens de rotation (57, 58), et à une moindre vitesse de révolution que la première partie (44).

# Fig.1

# Fig.2

Fig. 4

Fig. 3

Fig. 5

Fig.7

Fig.6

Fig.9

Fig.8